# EUROPEAN PATENT SPECIFICATION

(11) **EP 0 398 210 B1**
(45) Date of publication and mention of the grant of the patent: **27.07.1994**
(21) Application number: 90109016.7
(22) Date of filing: 14.05.1990
(51) Int. Cl.: H02G 15/04, F16L 55/115

(54) **End cover for a cable, tube or the like**
Endabdeckung für ein Kabel, Rohr oder ähnliches
Recouvrement pour l'extrémité d'un cable, tuyau on similaire

(30) Priority: 18.05.1989 SE 8901783
(43) Date of publication of application: 22.11.1990
(73) Proprietor: Alcatel IKO Kabel Aktiebolag, S-510 94 Grimsas (SE)
(72) Inventor: Benjaminsson, Erland, S-510 94 Grimsas (SE); Persson, Karl-Gustav, S-332 00 Gislaved (SE)
(74) Representative: Weinmiller, Jürgen

(56) References cited:
- DE-U- 8 713 548
- US-A- 2 145 705
- US-A- 4 444 996
- SIEMENS ZEITSCHRIFT, vol. 44, no. 8, August 1970, ERLANGEN DE, pages 508-512 ; T. SCHARNAGL: "Endenabdichtung von Fernmeldekabeln mit Polyäthylenmantel im Lager und auf der Strecke"

## Description

The present invention relates to an end cover for a cable, a tube or the like.

The new end cover has been created in connection with development of a simple and cheap end cover for an electrical cable. A cable of such type has to be carefully protected in connection with handling, such as transport and storing, so that in the first place damp is prevented from intruding the cable at the end points. It is previously known to use various types of end covers, but all now existing constructions have certain drawbacks, which makes the use thereof limited and more difficult.

A problem in connection with the application of a reliable end cover on an electrical cable is that the corresponding cable end very often is provided with sharp edges and perhaps also has sharp metal fires extending from the cable sheath. A reliable end cover must not be damaged mechanically to such an extent, that holes or cracks appear. The end cover should also provide a long life sealing effect at the same time as it is advantageous if it is simple to install and take away and also can be reused.

The most simple type of now existing cable end covers is by taping. Several different types of tape can exist. The tape is wrapped on - possibly after a mechanical protection has been applied over existing metal wire ends. The tape method is however not fully reliable. Metal wires can easily go through the tape, which also has a tendency to unstick after a certain time.

In connection with a commonly used arrangement a so called shrinking terminal is used. This is a comparatively large hood of plastic, which by means of a capstan is tread over the cable end. Within the hood is a glue material and when the hood is warmed up from outside it is shrinking and is well put together with the cable end. There are however certain difficulties in connection with the removal of the shrinking hood from the cable end and a hood of this type can of course not be used again.

It is also possible to use rubber sleeves for the intended sealing purpose. In this case a large assortment of such sleeves is needed, which sleeves have an internal flange, which creates a reliable fitness for the end diameter of the cable. A sleeve of this type is intended to be hammered on the spot. It should be noted that it is relatively difficult to get the sleeve to fit exactly. Further the sealing result is not always 100%.

A modification of the last mentioned sleeve is a somewhat simpler sleeve construction in plastic. The plastic sleeve functions, however, still worse than the rubber sleeve and needs millimetre precision in order to secure a relevant sealing. Also in this case large variety of sleeves of various dimensions is necessary.

It is also previously known to provide an end cover by dipping the relevant end, primarily a cable end, in a hot rubber solution, which then can solidify. This arrangement gives a reliable sealing which however is difficult to remove and not especially economical in use.

A more complicated arrangement includes a combination of a rubber sleeve and one or more hose clamps. Also in this case a relatively reliable sealing is obtained but the costs therefor will be too high.

US patent Nr. 2,145,705 discloses an end cover for a cable constituted by a sealing hood in the form of an elastic sealing element having a tubular part which is rolled up in an unmounted state and which is intended to be rolled out to a mounted state at the end of the cable so as to seal and surround a neighbouring part of this cable.

One of the drawbacks of this end cover is that it is only suitable for capping cable ends which diameter corresponds to the diameter of the cover.

The above mentioned drawbacks in connection with prior art are eliminated by means of an end cover formed in accordance with the principle of the invention, which end cover is easy to put on a cable end an well as easy to remove from said end in order to allow repeated use. The new end cover is further a very cheap alternative and gives very effective sealing. According to the invention the new end cover includes in combination a covering sleeve of a resistant material, which is provided with a cavity adapted for the respective end and has a preferably tapering part on the side opposite the cavity, and a sealing hood in the shape of an elastic sealing element which can be rolled out from said tapered part and when the end cover is mounted, is intended to encircle with a sealing effect both a part of the covering sleeve and a part of said end.

The covering sleeve included in the new end cover is preferably made of PVC-plastic. The primary task of the covering sleeve is to provide a reliable protection against sharp edges and metal wire ends projecting from the cable end. The covering sleeve should be dimensioned in such a way that said wires do not project therethrough. A further very important task for the covering sleeve is that it should be a good basis for the covering hood, so that the rolling out of the latter is facilitated at the same time as a reliable sealing is obtained.

Preferred embodiments of the new end cover will be more clear from the attached claims.

The invention will now be described more in detail in connection with a couple of examples with reference to the attached drawings.

Fig. 1 is a side view of a cable end with a started mounting of an end cover partly sectioned for better understanding.

Fig. 2 is also a side view of a cable end with started mounting of an end cover, partly sectioned, which is somewhat modified relative to the embodiment shown in fig. 1.

In connection with the two embodiments shown in the drawings one end of an electric cable 10 respectively 10' is shown. The illustrated end cover can however also be put on other items, for example a tube end, a bottle neck or the like.

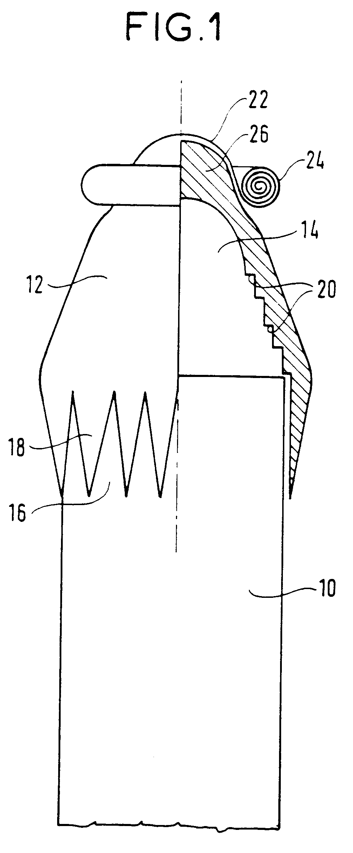

As shown in fig. 1 a cover sleeve 12 made of PVC-plastic is arranged on the cable end 10. The cover sleeve 12 has a cavity 14 adapted to the diameter of the cable end 10 and is put over the cable end, so that it extends some centimeters over the same. The part of the cover sleeve 12 surrounding the cable end 10 is designed in such a way that the wall thickness is decreasing towards the opening 16 of the cavity 14.
Further, the area in connection with the opening is slotted so that bendable parts in the form of fingers 18 rest against the cable end 10. By this form it is much easier to force the area around the opening 16 against the cable end 10 in order to obtain a good adaption of the cover sleeve 12. As also is shown by the figure the cavity 14 is provided with circular shoulders 20. These have different diameters which means that the same cover sleeve 12 can fit to several different cable diameters. The assortment of differently dimensioned end covers can thereby be considerably reduced.

The sealing hood 22 shown in fig. 1 not yet mounted on the cable end 10 can best be compared with a condom which, in unmounted state of the end cover, has the circular rolled up part 24 resting in a track 26 formed in the outer surface of the cover sleeve. The sealing hood 22 is thereby prevented from falling away and the cover sleeve 12 together with the sealing hood 22 can be handled as one unit. The sealing hood 22 is made of rubber and must have such a thickness that it can be rolled up respectively rolled down.

In order to obtain good sealing function the sealing hood 22 is rolled out from the position shown on the drawing over the thickest part of the cover sleeve 12 and a certain distance in over the cable end 10, so that when the end cover is in its fully mounted state, the sealing hood extends in over the cable end at least some centimeters more than the cover sleeve 12. Due to the elasticity of the sealing hood 22 the rubber seals well all over against both the cover sleeve 12 and the cable end 10 thereby providing a reliable sealing. The fingers 18 are also pressed between the slots of the cover sleeve against the cable end 10. When the end cover is to be removed from the cable end 10 the sealing hood 22 is again rolled up until its rolled up part 24 comes into place in the track 26, and thereafter the cover sleeve 12 can easily be removed from the cable end 10.

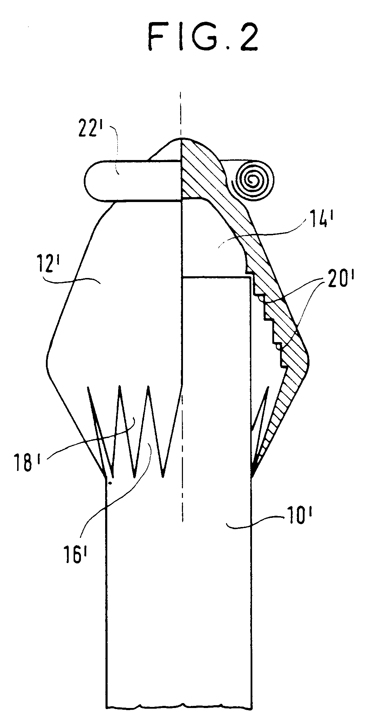

In connection with the embodiment according to fig. 2 a much thinner cable is used, which also is inserted further in the corresponding cavity 14' of the cover sleeve 12'. The cable end 10' is in this case pressed against the inner shoulder 20' of the cavity 14'. It is also seen on the figure that the fingers 18', which are arranged in connection to the opening 16' of the cavity 14', are pressed further in against the cable end 10'. Otherwise the embodiment according to fig. 2 differs from that of fig. 1 by the fact that the sealing hood 22' is not made of a sack-formed base material but instead of a tube-formed material. The same excellent sealing function is obtained as in connection with the embodiment according to fig. 1. The embodiment according to fig. 2 is especially cheap in production.

Modification of the above described end cover can of course be made by those skilled in the art within the limits of the following claims.

## Claims

1. End cover for a cable, tube or the like, including a sealing hood (22, 22') in the form of an elastic sealing element, having a tubular part which is rolled up in an unmounted state of the end cover and which can be rolled out to a mounted state in which it is intended to seal and surround a neighbouring part of said cable, tube or the like, **characterised in that** it further includes a cover sleeve (12; 12') of resistant material, which is provided with a cavity (14, 14') adapted for receiving an end (10, 10') of such cable, tube or the like, said cover sleeve (12; 12') having a circular track (26) formed in its outer surface in which said rolled up tubular part of said sealing hood (22, 22') rests in the unmounted state and which sealing hood (22, 22') can be rolled out from said circular track (26) to said mounted state in which it is intended to seal and surround a part of the cover sleeve (12; 12') as well as a neighbouring part of said cable, tube or the like.

2. End cover according to claim 1, **characterized** by said cover sleeve (12; 12') being made of plastic, preferably PVC-plastic, and said sealing hood (22; 22') being made of rubber.

3. End cover according to claims 1-2, **characterized** by said sealing hood (22') being made of a tube-formed base material.

4. End cover according to claims 1-2, **characterized** by the sealing hood (22) being formed of a sack-formed base material.

5. End cover according to any one of the claims 1-4, **characterized** by said cavity (14; 14') being provided with circular shoulders (20; 20') with different diameters for adaption to different cable end dimensions.

6. End cover according to any one of the claims 1-5, **characterized** by said cover sleeve (12; 12') being tapering in connection with the opening of said cavity (16; 16'), which is provided with bendable parts (18; 18') in order to facilitate the adaption of the periphery area around the cavity opening to various cable end dimensions.

## Patentansprüche

1. Endabdeckung für ein Kabel, Rohr oder ähnliches mit einer Schutzhaube (22, 22') in Form eines elastischen Verschlußelementes, das einen röhrenartigen Teil aufweist, das im nicht montierten Zustand der Endabdeckung aufgerollt ist und das abgerollt werden kann und dann einen benachbarten Teil des Kabels, des Rohres oder ähnliches umgibt und verschließt, dadurch gekennzeichnet, daß sie weiterhin eine Abdeckmuffe (12, 12') aus widerstandsfähigem Material aufweist, die mit einer Aushöhlung (14, 14') versehen ist, um ein Ende (10, 10') des Kabels, Rohres oder ähnliches aufzunehmen und die eine ringförmige Rille (26) in ihrer äußeren Oberfläche hat, in der das röhrenförmige Teil der Abdeckhaube (22, 22') im unmontierten Zustand ruht und das aus der Rille ausgerollt werden kann zum montierten Zustand, in welchem es einen Teil der Abdeckmuffe (12, 12') und den benachbarten Teil des Kabels, Rohres oder ähnliches umschließt und schützt.

2. Endabdeckung gemäß Anspruch 1, dadurch gekennzeichnet, daß die Abdeckmuffe (12, 12') aus Plastik, vorzugsweise PVC-Plastik und die Schutzhaube (22, 22') aus Gummi besteht.

3. Endabdeckung nach Anspruch 1-2, dadurch gekennzeichnet, daß die Schutzhaube (22, 22') aus einem röhrenförmigen Halbzeug besteht.

4. Endabdeckung nach Anspruch 1-2, dadurch gekennzeichnet, daß die Schutzhaube (22, 22') aus einem sackförmigen Halbzeug besteht.

5. Endabdeckung nach einem der Ansprüche 1-4, dadurch gekennzeichnet, daß die Aushöhlung (14, 14') mit ringfömigen Schultern (20, 20') mit verschiedenen Durchmessern zur Anpassung an verschiedene Durchmesser der Kabelenden versehen ist.

6. Endabdeckung nach einem der Ansprüche 1-5, dadurch gekennzeichnet, daß die Abdeckmuffe (12, 12') im Bereich der Öffnung der Aushöhlung (16, 16') spitz zulaufend und mit biegbaren Teilen (18, 18') versehen ist, um die Aushöhlung an die verschiedenen Durchmesser der Kabelenden anzupassen.

## Revendications

1. Un recouvrement pour l'extrémité d'un câble, tuyau ou similaire, comportant un capuchon d'étanchéité (22, 22') sous la forme d'un élément d'étanchéité élastique possédant une partie tubulaire qui est roulée, à l'état non monté du recouvrement d'extrémité, et qui peut être déroulée à l'état monté, dans lequel il est destiné à entourer la partie proche dudit câble, tube ou similaire, pour en assurer l'étanchéité, caractérisé par le fait qu'il comporte, en outre, un embout de recouvrement (12, 12') en matériau résistant, présentant une cavité (14, 14') adaptée à recevoir l'extrémité (10, 10') dudit câble, tube ou similaire, ledit embout de recouvrement (12, 12') présentant un sillon circulaire (26) formé dans sa surface extérieure, dans lequel ladite partie tubulaire roulée dudit capuchon d'étanchéité (22, 22') repose à l'état non monté, ce capuchon d'étanchéité (22, 22') pouvant être déroulé à partir dudit sillon circulaire (26) pour se retrouver à l'état monté, dans lequel il est destiné à entourer une partie de l'embout de recouvrement (12,12') ainsi que la partie voisine dudit câble, tube ou similaire, pour en assurer l'étanchéité.

2. Recouvrement d'extrémité conforme à la revendication 1, caractérisé par le fait que ledit embout de recouvrement (12, 12') est réalisé en plastique, de préférence en PVC, et que ledit capuchon d'étanchéité (22, 22') est réalisé en caoutchouc.

3. Recouvrement d'extrémité conforme aux revendications 1 et 2, caractérisé par le fait que ledit capuchon d'étanchéité (22') est réalisé à partir d'un matériau de base en forme de tube.

4. Recouvrement d'extrémité conforme aux revendications 1 et 2, caractérisé par le fait que le capuchon d'étanchéité (22) est réalisé dans un matériau de base en forme de sac.

5. Recouvrement d'extrémité conforme à l'une quelconque des revendications 1 à 4, caractérisé par le fait que ladite cavité (14, 14') présente des épaulements circulaires (20, 20') de diamètres différents permettant de l'adapter à différentes dimensions d'extrémité de câble.

6. Recouvrement d'extrémité conforme à l'une quelconque des revendications 1 à 5, caractérisé par le fait que ledit embout de recouvrement (12, 12') présente une conicité par rapport à l'ouverture de ladite cavité (16, 16') qui comporte des parties pliables (18, 18') afin de faciliter l'adaptation de la zone périphérique entourant l'ouverture de la cavité à diverses dimensions d'extrémité de câble.
